# EUROPEAN PATENT APPLICATION

(11) **EP 3 957 514 A1**
(43) Date of publication of application: **23.02.2022**
(21) Application number: 20191297.9
(22) Date of filing: 17.08.2020
(51) Int. Cl.: B60L 58/25, B60L 58/27

(54) **ACTIVE BATTERY HEATING WITH REACTIVE POWER**

(71) Applicant: ABB Schweiz AG, 5400 Baden (CH)
(72) Inventor: Wicki, Stefan, 5702 Niederlenz (CH); Andersson, Caroline, 8032 Zurich (CH); Salis, Silvia, 5430 Wettingen (CH); Engeli, Cornel, 8005 Zurich (CH)
(74) Representative: Qip Patentanwälte Dr. Kuehn & Partner mbB

(57) **Abstract**

An electrical energy storage system (100) comprises: a battery (102); a DC link capacitor (106); a converter (108) adapted for generating an output voltage (Uₒᵤₜ) with different voltage levels from a DC link voltage (U_{DC}) provided by the DC link capacitor (106); an electrical filter (110) comprising at least a filter inductor (114), wherein the battery (102) and the converter (108) are interconnected via the electrical filter (110); and a controller (116) adapted for controlling switches (202, 204) of the converter (108) such that a frequency of an AC current through the battery (102) is a resonant frequency of a resonant circuit (120) composed of the DC link capacitor (106) and the filter inductor (114).

## Description

### FIELD OF THE INVENTION

The invention relates to an electrical energy storage system. Furthermore, the invention relates to a method, a computer program and a computer-readable medium for heating a battery of an electrical energy storage system.

### BACKGROUND OF THE INVENTION

In order to be fully operational, a battery energy storage system (BESS) should have a temperature within a certain temperature range. At low ambient temperatures, it is common to heat the batteries included in the battery energy storage system at startup.

For example, the batteries may be thermally coupled to a battery thermal management system. To heat the batteries, the fluid in the battery thermal management system may be heated via a heating element. However, the viscosity of the fluid may be relatively high at low temperatures, which may cause problems especially when long tubes are used for transferring heat from the heating element to the batteries.

US 2011/288704 A1 describes a battery heating system with a switch, a battery heater and a high voltage vehicle battery. The switch connects the battery heater either to an external power source or to an internal power source, depending on whether the battery heating system is plugged into the external power source or a vehicle propulsion system is active.

CN 109841926 A describes a method for fast self-heating of a battery at low temperature by short-circuiting the battery and using an external heater to additionally heat the battery.

### DESCRIPTION OF THE INVENTION

It is an objective of the invention to efficiently heat a battery used in an electrical energy storage system for high-power applications.

This objective is achieved by the subject-matter of the independent claims. Further exemplary embodiments are evident from the dependent claims and the following description.

A first aspect of the invention relates to an electrical energy storage system. The electrical energy storage system may be electrically connected to a high-power system such as a power grid or an electric machine and may be adapted for supplying the high-power system with electrical energy provided by a battery and/or for storing electrical energy provided by the high-power system in the battery. The electrical energy storage system may comprise a high-power converter composed of a DC-to-DC converter, which may also be called an energy storage chopper, one or more inverters and a DC link connected to each of said devices. The DC link may comprise one or more DC link capacitors. The high-power system and the high-power converter are described in more detail in the following.

According to an embodiment of the invention, the electrical energy storage system comprises a battery. The battery may be composed of one or more electrochemical battery cells. The battery cells may be connected in parallel and/or in series. The battery may comprise at least one battery module. The battery module may be composed of at least one stack of battery cells. As an example, a stack in a battery module may be composed of a plurality of battery cell pairs, wherein the battery cells of each battery cell pair are connected in parallel and wherein the battery cell pairs are connected in series.

According to an embodiment of the invention, the electrical energy storage system comprises a DC link capacitor and an electrical converter adapted for generating an output voltage with different voltage levels from a DC link voltage provided by the DC link capacitor. The converter may be a DC-to-DC converter adapted for converting a DC input voltage, i.e. the DC link voltage, to a variable DC output voltage. Each of the voltage levels of the output voltage may correspond to a switching state of the converter. To switch the converter into a certain switching state, switching commands, such as turn-on and turn-off commands, may be generated for each switch of the converter by a controller of the electrical energy storage system. As an example, the converter may be adapted for providing an output voltage that periodically alternates between two different voltage levels at a certain frequency. The output voltage may for example have the form of a symmetrical square wave. In other words, the output voltage may be a sequence of pulses of the same width. However, it is also possible that the output voltage is a sequence of pulses of different widths.

As already mentioned above, the DC link capacitor and the converter may be components of a high-power converter for supplying and/or driving a high-power system. The converter, as wells as other components of the high-power converter, may be a high-power device adapted for processing currents of more than 100 A and/or voltages of more than 400 V. The converter may comprise power semiconductor switches such as MOSFETs or IGBTs.

Accordingly, the high-power system may be operated with currents of more than 100 A and/or voltages of more than 400 V. The high-power system may comprise an electric machine such as an electric motor or electric generator, e.g. a diesel generator. The high-power system may for example be the drive system of an electric vehicle, such as a traction vehicle. In this case, the high-power converter may drive the drive system.

Additionally to the DC link capacitor and the converter, the high-power converter may comprise at least one inverter, which may be a high-power device (see above). The inverter may be adapted for supplying the DC link capacitor with electrical energy from a voltage source such as a catenary, a power grid or a generator. Such an inverter may also be adapted for supplying an electric motor, e.g. a traction motor of a train or other kinds of electric vehicles, with an AC supply voltage generated from the DC link voltage.

The high-power converter may comprise at least one additional DC-to-DC converter, such as a brake chopper adapted for supplying the DC link with electrical energy via a brake resistor.

In a normal operation mode, the converter may be controlled to supply the high-power system with power from the battery. Additionally or alternatively, the converter may also be controlled to charge the battery with power from the high-power system. The conversion may be performed by a controller of the electrical energy storage system.

According to an embodiment of the invention, the electrical energy storage system comprises an electrical filter comprising at least a filter inductor, wherein the battery and the converter are interconnected via the electrical filter. Additionally, the electrical filter may comprise a filter capacitor. The filter inductor may be a filter component with a defined inductance. The filter capacitor may be a filter component with a defined capacity. Additionally to the filter inductor and the filter capacitor, the electrical filter may comprise a filter resistor as a damping element. In other words, the electrical filter may be an RLC circuit composed of the filter resistor, the filter inductor and the filter capacitor. The filter resistor may be a filter component with a defined resistance and/or a parasitic resistance. The electrical filter may also comprise more than one filter inductor and/or more than one filter capacitor and/or more than one filter resistor.

It may be that a first terminal of the filter capacitor is connected to a first terminal of the battery and to a first output terminal of the converter and that a second terminal of the filter capacitor is connected to a second terminal of the battery and, via the filter inductor, to a second output terminal of the converter.

According to an embodiment of the invention, the electrical energy storage system comprises a controller adapted for controlling switches of the converter such that a frequency of an AC current through the battery and/or an AC voltage at the output of the converter is a resonant frequency of a resonant circuit composed of the DC link capacitor and the filter inductor. The controller may additionally be adapted for controlling further components of the electrical energy storage systems, such as inverters, DC-to-DC converters or a temperature control device as described below. It may be that the controller is adapted for controlling the high-power converter and/or the high-power system (see above).

The converter may interconnect the electrical filter and the DC link capacitor in such a way that the electrical filter and the DC link capacitor form a resonant circuit. Exciting the resonant circuit at its resonant frequency with electrical energy from the DC link capacitor and/or the battery has the effect that an alternating current flows between the battery and the DC link capacitor, which heats the battery directly from inside.

The switches of the converter may be controlled such that a frequency of an AC current through the battery is a resonant frequency of the resonant circuit and such that the battery is heated.

The resonant frequency may be a frequency at which electrical energy is cyclically transferred between the DC link capacitor and the filter inductor. In other words, a reactive AC current flows through the battery at resonance, i.e., when a voltage across the battery alternates at the resonant frequency. The conduction losses caused by this current heat the battery cells directly from inside. The magnitude of the current may be controlled via the modulation of the converter. This has the advantage that, even at very low temperatures, e.g. at minus 20 degrees Celsius and below, the battery can be heated very quickly and efficiently and that the heating efficiency does not depend on the viscosity of a heat transfer fluid. Another advantage is that the state of charge of the battery can be kept approximately constant during heating. Also, heating losses caused by the heat transfer fluid and/or heat transfer tubes can be avoided.

The energy for heating the battery may be provided by a power grid and/or the battery itself.

According to an embodiment of the invention, the electrical filter further comprises a filter capacitor. The filter capacitor and the filter inductor may be connected in series. For example, a first terminal of the filter inductor may be connected to the second output terminal of the converter and a second terminal of the filter inductor may be connected to the second terminal of the filter capacitor.

According to an embodiment of the invention, the filter inductor and the battery are connected in series. In other words, the second terminal of the filter inductor may be connected to the second terminal of the battery. The second terminal of the filter inductor may additionally be connected to the second terminal of the filter capacitor.

According to an embodiment of the invention, the filter capacitor and the battery are connected in parallel. In other words, the first terminal of the filter capacitor may be connected to the first terminal of the battery and the second terminal of the filter capacitor may be connected to the second terminal of the battery. The second terminal of the filter capacitor and the second terminal of the battery may additionally be connected to the second terminal of the filter inductor.

According to an embodiment of the invention, the filter inductor and the DC link capacitor are connected in series.

According to an embodiment of the invention, the converter comprises a half-bridge with an upper switch and a lower switch interconnected at a midpoint. For example, the switches may be MOSFETs or IGBTs. It may be that each of the switches has an antiparallel diode. The midpoint and a first terminal of the DC link capacitor may be interconnected via the upper switch. The midpoint and a second terminal of the DC link capacitor may be interconnected via the lower switch. The second output terminal of the converter may be connected to the midpoint. In other words, the first terminal of the filter inductor may be connected to the midpoint (via the second output terminal). The midpoint and the first output terminal of the converter may be interconnected via the lower switch.

According to an embodiment of the invention, the half-bridge and the DC link capacitor are connected in parallel.

According to an embodiment of the invention, the electrical filter is connected to the midpoint.

It may be that the controller is adapted for switching the switches of the converter between a first switching state and a second switching state at a switching frequency. In the first switching state, the upper switch may be in a conductive state, whereas the lower switch may be in a non-conductive state. In the second switching state, the upper switch may be in a non-conductive state, whereas the lower switch may be in a conductive state. The first switching state and the second switching state may alternate at the switching frequency. The switching frequency may be equal to the resonant frequency of the resonant circuit composed of the DC link capacitor and the filter inductor. Such modulation method may also be called fundamental frequency clocking or square-wave modulation. It may also be that the switching frequency is different from the resonant frequency. This may be the case when pulse-width modulation is used to generate the output voltage. The reference signal may be a sinusoidal or non-sinusoidal signal, e.g. a reference voltage.

According to an embodiment of the invention, the electrical energy storage system further comprises a second converter connected at its output to the DC link capacitor and at its input to a secondary coil of a transformer connected at its primary coil to a catenary. The catenary may be supplied by a power grid. The second converter may be an inverter adapted for converting an AC voltage provided by the secondary coil of the transformer into the DC link voltage.

According to an embodiment of the invention, the electrical energy storage system further comprises a further converter connected at one side to the DC link capacitor and at another side to an electric machine and adapted for converting between the DC link voltage and an AC voltage of the electric machine. The further converter may be an inverter adapted for converting the DC link voltage into the AC voltage of the electric machine and/or for converting the AC voltage of the electric machine into the DC link voltage.

The second converter and/or the further converter may be a high-power device (see above).

According to an embodiment of the invention, the second converter comprises an H-bridge circuit.

An H-bridge circuit, which may also be called a four-quadrant converter, may comprise two parallel-connected half-bridges (see above), i.e. two upper switches and two lower switches, wherein each of the midpoints of the half-bridges may be connected to a load or a voltage source.

According to an embodiment of the invention, the further converter is a three-phase converter. Such a three-phase converter may comprise three parallel-connected half-bridges or phase legs, wherein each of the midpoints of the half-bridges may be connected to a load or a voltage source.

According to an embodiment of the invention, the electrical energy storage system further comprises a heat transfer fluid circuit in thermal contact with the battery and a temperature control device adapted for tempering and circulating the heat transfer fluid in the heat transfer fluid circuit. The heat transfer fluid circuit may comprise a channel, e.g. in the form of one or more tubes, that runs at least partially around and/or through the battery. The channel may conduct the heat transfer fluid. The heat transfer fluid may be used to cool and/or heat the battery. The temperature control device may comprise a heating element to heat the heat transfer fluid. Furthermore, the temperature control device may comprise an electric pump for pumping the heat transfer fluid through the heat transfer fluid circuit.

According to an embodiment of the invention, the controller is further adapted for controlling the temperature control device. The controller may be adapted for controlling the temperature control device, i.e. the heat element and/or the pump, in dependence of a measured temperature of the battery.

A second aspect of the invention relates to a method for heating a battery of an electrical energy storage system. The method may be performed by the controller of the electrical energy storage system according to an embodiment of the first aspect of the invention.

According to an embodiment of the invention, the method comprises: generating switching signals for the switches of the converter from a reference signal that alternates at the resonant frequency of the resonant circuit; applying the switching signals to the switches of the converter such that the output voltage is generated.

According to an embodiment of the invention, the method further comprises: heating the battery with a current through the battery, the current generated by the output voltage. As already describe above, a reactive AC current may flow through the battery. The conduction losses caused by this current may heat the battery directly from inside.

According to an embodiment of the invention, the switching signals are generated by means of square-wave modulation with the resonant frequency. The switching signals may be generated and applied such that the switches are switched solely at the resonant frequency. This may also be referred to as fundamental frequency clocking or square-wave modulation. In this case, the output voltage may have the form of a (symmetrical) square wave that alternates at the resonant frequency. Switching the switches at the resonant frequency causes the battery to warm up very quickly.

According to an embodiment of the invention, the switching signals are generated by means of pulse-width modulation.

Further aspects of the invention relate to a computer program comprising instructions which, when the computer program is executed by a computer, cause the computer to carry out the method as described above and below and to a computer-readable medium having stored thereon such a computer program. Said computer may be the controller of the electrical energy storage system. The method may be implemented in software. The controller may have a memory in which the computer program is stored and a processor for running the computer program. However, the method may also be at least partially implemented in hardware, for example in a DSP (Digital Signal Processor) and/or an FPGA (Field Programmable Gate Array).

A computer-readable medium may be a floppy disk, a hard disk, a USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a nonvolatile or volatile memory.

It has to be understood that features of the electrical energy storage system as described above and below may be features of the method, the computer program and the computer-readable medium as described above and below, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows an electrical energy storage system according to an embodiment of the invention.
Fig. 2 schematically shows a converter of the electrical energy storage system of fig. 1 in more detail.
Fig. 3 shows a diagram of an output voltage generated by a converter of the electrical energy storage system of fig. 1.
Fig. 4 shows a diagram of a heating power generated at a battery of fig. 1 according to the output voltage of fig. 3.
Fig. 5 shows a flow diagram of a method performed by a controller of the electrical energy storage system of fig. 1.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

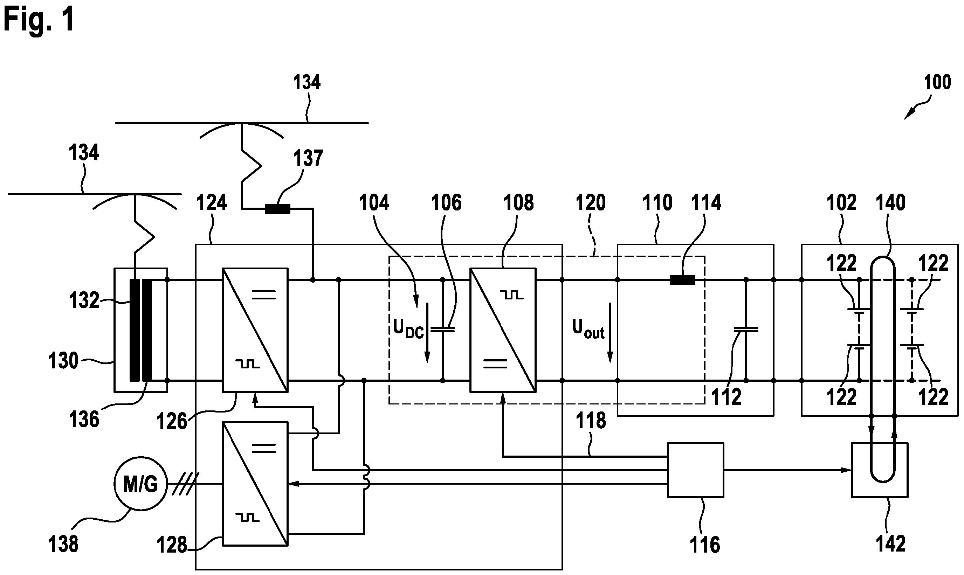

Fig. 1 schematically shows an electrical energy storage system 100 comprising a battery 102, a DC link 104 with a DC link capacitor 106, a converter 108 and an electrical filter 110. The battery 102 is connected to the converter 108 via the electrical filter 110, which may be a low-pass filter. The converter 108 is a DC-to-DC converter adapted for controlling an energy flow between the battery 102 and the DC link 104. The converter 108 converts a DC link voltage U_{DC} across the DC link capacitor 106 to an output voltage Uₒᵤₜ with different voltage levels, e.g. two different voltage levels. The output voltage Uₒᵤₜ may be filtered by the electrical filter 110 such that a filtered output voltage Uₒᵤₜ is applied to the battery 102.

The electrical filter 110 may comprise a filter capacitor 112 and a filter inductor 114. It is possible that the electrical filter 110 only comprises the filter inductor 114. Exemplary, the filter capacitor 112 and the filter inductor 114 are connected in series and, together with a parasitic resistance of the electrical filter 110, form a RLC circuit that acts as a passive low-pass filter of second order. However, other configurations of the electrical filter 110 are possible. For example, the electrical filter 110 may also be designed as a filter of a higher than second order.

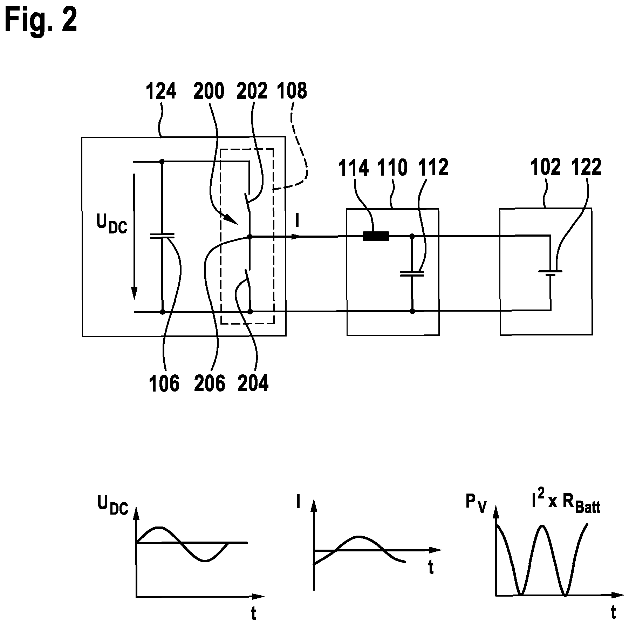

The converter 108 is controlled by a controller 116 of the electrical energy storage system 100. The controller 116 may generate switching signals 118 for switching switches of the converter 108 (see fig. 2). The switches may be power semiconductor switches such as MOSFETs and/or IGBTs.

The filter inductor 114 and the DC link capacitor 106 form a resonant circuit 120 with a specific resonant frequency. The controller 116 may switch the converter 108 according to the resonant frequency in such a way that electrical energy is cyclically transferred between the filter inductor 114 and the DC link capacitor 106, which causes an alternating current through the battery 102 that heats the battery 102 directly from inside. In other words, the switching signals 118 may be generated by the controller 116 in such a way that a resulting AC current through the battery 102 has a frequency equal to the resonant frequency of the resonant circuit 120.

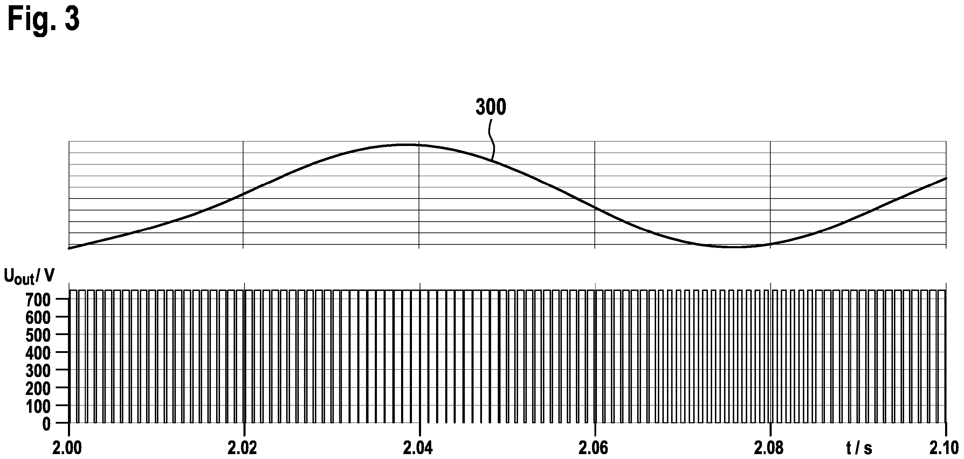

Referring to fig. 3, the output voltage Uₒᵤₜ may be generated from a reference signal 300 that alternates at the resonant frequency of the resonant circuit 120. The reference signal 300 may be an analog or digital signal. For example, the output voltage Uₒᵤₜ may be generated by pulse-width modulating the reference signal 300, as illustrated in fig. 3. Alternatively, the output voltage Uₒᵤₜ may be generated using fundamental frequency clocking or square-wave modulation. In this case, the output voltage Uₒᵤₜ may have the form of a symmetrical square wave periodically alternating between two different voltage levels at the resonant frequency of the resonant circuit 120.

Again referring to fig. 1, the battery 102 may comprise a plurality of electrochemical battery cells 122, which may be connected in series and/or in parallel.

The DC link 104 may also comprise more than one DC link capacitor 106.

The converter 108 and the DC link 104 may be part of a high-power converter 124. Additionally to the converter 108 and the DC link 104, the high-power converter 124 may comprise a first inverter 126 and a second inverter 128.

The first inverter 126 may be connected at its input side to a transformer 130 and at its output side to the DC link capacitor 106. The transformer 130 may be a traction transformer connected at its primary coil 132 to a catenary 134 for drawing power from a power grid and at its secondary coil 136 to the input side of the first inverter 126.

Alternatively, the catenary 134 may be adapted for providing a DC voltage and may be connected via a choke 137 to the DC link 104.

The second inverter 128 may be connected at one side to an electric machine 138 and at another side to the DC link capacitor 106. The electric machine 138 may be a motor M or a generator G. The motor M and the generator G may be the same electric machine operated in different modes or may be separate electric machines. For example, the generator G may be a diesel generator and the motor M may be a traction motor. The second inverter 128 may supply the motor M with a multiphase AC voltage generated from the DC link voltage U_{DC}. Inversely, the second inverter 128 may feed the DC link 104 with a DC link voltage U_{DC} generated from a multiphase AC voltage provided by the generator G. It is possible that the high-power converter 124 comprises separate inverters 128 for the motor M and the generator G.

The first inverter 126 may, for example, comprise an H-bridge circuit (not shown) composed of four power switches which are arranged in two half-bridges. The midpoints of the two half-bridges of the H-bridge circuit of the first inverter 126 may be connected to the secondary coil 136 of the transformer 130. The second inverter 128 may, for example, be a three-phase converter with three parallel-connected half-bridges or phase legs (not shown), which may be connected at their midpoints to the terminals of the electric machine 138, i.e. of the motor M and/or of the generator G.

In addition, the high-power converter 124 may comprise at least one further DC-to-DC converter (not shown) connected to the DC link capacitor 106, such as a brake chopper.

The controller 116 may further be adapted for controlling switches of the inverters 126, 128 and of the at least one further DC-to-DC converter.

The electrical energy storage system 100 may additionally comprise an external cooling and/or heating system for externally cooling and/or heating the battery 102. Such system may include a heat transfer fluid circuit 140 in thermal contact with some or each of the battery cells 122 and a temperature control device 142 adapted for circulating, heating and/or cooling the heat transfer fluid in the heat transfer fluid circuit 140. The temperature control device 142 may be controlled by the controller 116 in dependence of a measured temperature of the battery 102.

For example, the controller 116 may heat the battery 102 via the converter 108 at very low temperatures. Under such conditions, the viscosity of the heat transfer fluid in the heat transfer fluid circuit 140 may be relatively high and the heating effect caused by the heat transfer fluid may be insufficient. Once the viscosity of the heat transfer fluid is low enough due to the heating effect caused by the resonant circuit 120, the controller 116 may additionally activate the temperature control device 142 to further heat the battery 102.

Fig. 2 shows a simplified version of the electrical energy storage system 100 of fig. 1. Also shown are diagrams for the DC link voltage U_{DC}, the alternating current I flowing through the battery 102 and a heating power P_{V} caused inside the battery 102 and equal to the product of I² and an internal resistance R_{Batt} of the battery 102.

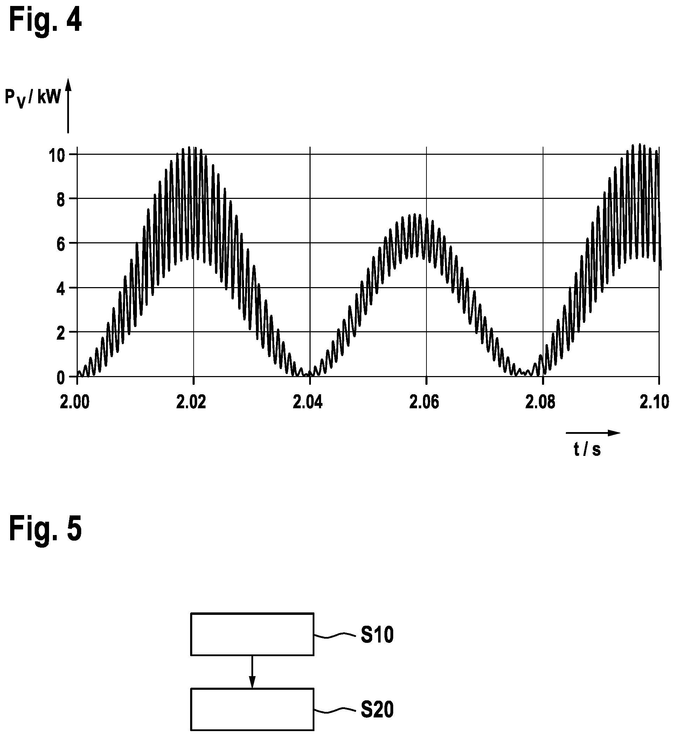

A more detailed curve of the heating power P_{V} is shown in fig. 4.

As shown in fig. 2, the converter 108 may comprise a half-bridge 200 with an upper switch 202 and a lower switch 204 connected in series and interconnected at a midpoint 206. The half-bridge 200 and the DC link capacitor 106 may be connected in parallel. The switches 202, 204 may be MOSFETs or IGBTs with antiparallel diodes. The switches 202, 204 may be switched by the controller 116 between a first switching state, in which the upper switch 202 is closed and the lower switch 204 is open, and a second switching state, in which the upper switch 202 is open and the lower switch 204 is closed.

The filter inductor 114 may be connected to the midpoint 206.

The filter inductor 114 and the filter capacitor 112 may be connected in series.

Furthermore, the battery 102 and the filter capacitor 112 may be connected in parallel.

Fig. 5 shows a flow diagram of a method for actively heating the battery 102 with reactive power. The method may be performed by the controller 116 of the electrical energy storage system 100.

In step s10, the switching signals 118 for the switches 202, 204 of the converter 108 are generated from the reference signal 300 that alternates at the resonant frequency of the resonant circuit 120.

In step s20, the switching signals 118 are applied to the switches 202, 204 of the converter 108 such that the output voltage Uₒᵤₜ is generated at the output terminals of the converter 108. This has the effect that an alternating current flows through the battery 102, which heats the battery 102 from inside.

The switching signals 118 may be pulse-width modulated from the reference signal 300.

Simulations have shown that, depending on the DC link voltage U_{DC} and the modulation method, the resulting heating efficiency η may be more than 90 % and may significantly surpass the heating efficiency η of alternative current load methods, such as discharging the battery using the resistor of the voltage limiter unit (usually around 10 %). The heating efficiency η may be defined as the heating power P_{V} divided by the sum of the heating power P_{V}, the converter losses P_{conv} and the inductor losses P_{Lf}.

ThiWhile the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or superordinate controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: electrical energy storage system
- 102: battery
- 104: DC link
- 106: DC link capacitor
- 108: converter
- 110: electrical filter
- 112: filter capacitor
- 114: filter inductor
- 116: controller
- 118: switching signal
- 120: resonant circuit
- 122: battery cell
- 124: high-power converter
- 126: first inverter / second converter
- 128: second inverter / further converter
- 130: transformer
- 132: primary coil
- 134: catenary
- 136: secondary coil
- 137: choke
- 138: electric machine
- 140: heat transfer fluid circuit
- 142: temperature control device
- 200: half-bridge
- 202: upper switch
- 204: lower switch
- 206: midpoint
- 300: reference signal
- G: generator
- I: alternating current
- M: motor
- P_{V}: heating power
- R_{Batt}: internal resistance of battery
- U_{DC}: DC link voltage
- Uₒᵤₜ: output voltage

## Claims

1. An electrical energy storage system (100), comprising:
a battery (102);
a DC link capacitor (106);
a converter (108) adapted for generating an output voltage (Uₒᵤₜ) with different voltage levels from a DC link voltage (U_{DC}) provided by the DC link capacitor (106);
an electrical filter (110) comprising at least a filter inductor (114), wherein the battery (102) and the converter (108) are interconnected via the electrical filter (110); and
a controller (116) adapted for controlling switches (202, 204) of the converter (108) such that a frequency of an AC current through the battery (102) is a resonant frequency of a resonant circuit (120) composed of the DC link capacitor (106) and the filter inductor (114).

2. The electrical energy storage system (100) of claim 1,
wherein the electrical filter (110) further comprises a filter capacitor (112);
wherein the filter capacitor (112) and the filter inductor (114) are connected in series.

3. The electrical energy storage system (100) of claim 2,
wherein the filter capacitor (112) and the battery (102) are connected in parallel.

4. The electrical energy storage system (100) of one of the previous claims,
wherein the filter inductor (114) and the DC link capacitor (106) are connected in series; and/or
wherein the filter inductor (114) and the battery (102) are connected in series.

5. The electrical energy storage system (100) of one of the previous claims,
wherein the converter (108) comprises a half-bridge (200) with an upper switch (202) and a lower switch (204) interconnected at a midpoint (206);
wherein the half-bridge (200) and the DC link capacitor (106) are connected in parallel;
wherein the electrical filter (110) is connected to the midpoint (206).

6. The electrical energy storage system (100) of one of the previous claims, further comprising:
a second converter (126) connected at its output to the DC link capacitor (106) and at its input to a secondary coil (136) of a transformer (130) connected at its primary coil (132) to a catenary (134), the second converter (126) adapted for converting an AC voltage provided by the secondary coil (136) of the transformer (130) into the DC link voltage (U_{DC}).

7. The electrical energy storage system (100) of one of the previous claims, further comprising:
a further converter (128) connected at one side to the DC link capacitor (106) and at another side to an electric machine (138, M, G) and adapted for converting between the DC link voltage (U_{DC}) and an AC voltage of the electric machine (138, M, G).

8. The electrical energy storage system (100) of claim 6 or 7,
wherein the second converter (126) comprises an H-bridge circuit; and/or
wherein the further converter (128) is a three-phase converter.

9. The electrical energy storage system (100) of one of the previous claims, further comprising:
a heat transfer fluid circuit (140) in thermal contact with the battery (102);
a temperature control device (142) adapted for tempering and circulating the heat transfer fluid in the heat transfer fluid circuit (140);
wherein the controller (116) is further adapted for controlling the temperature control device (142).

10. A method for heating a battery (102) of an electrical energy storage system (100) of one of the previous claims, the method comprising:
generating switching signals (118) for the switches (202, 204) of the converter (108) from a reference signal (300) indicating a resonant frequency of the resonant circuit (120); and
applying the switching signals (118) to the switches (202, 204) of the converter (108) such that the output voltage (Uₒᵤₜ) is generated.

11. The method of claim 10, further comprising:
heating the battery (102) with a current through the battery (102), the current generated by the output voltage (Uout).

12. The method of claim 10 or 11,
wherein the switching signals (118) are generated by means of square-wave modulation with the resonant frequency; and/or
wherein the switching signals (118) are generated by means of pulse-width modulation.

13. A computer program comprising instructions to cause the electrical energy storage system (100) of one of claims 1 to 9 to carry out the method of one of claims 10 to 12.

14. A computer-readable medium having stored thereon the computer program of claim 13.
